# EUROPEAN PATENT SPECIFICATION

(11) **EP 2 541 079 B1**
(45) Date of publication and mention of the grant of the patent: **23.09.2015**
(21) Application number: 12172684.8
(22) Date of filing: 20.06.2012
(51) Int. Cl.: F16B 33/06

(54) **A coated fastener**
Beschichtetes Befestigungsmittel
Fixation revêtue

(30) Priority: 28.06.2011 GB 201110939
(43) Date of publication of application: 02.01.2013
(73) Proprietor: Rolls-Royce plc, London SW1E 6AT (GB)
(72) Inventor: Pattinson, Glen, Derby, Derbyshire DE73 8LR (GB); Robinson, Michael, Sheffield, S3 8BH (GB)
(74) Representative: Rolls-Royce plc

(56) References cited:
- AU-A4- 2008 100 629
- JP-A- 9 112 525
- JP-A- 61 250 178
- US-A- 5 231 959
- US-A- 5 747 428

## Description

This invention relates to a coated element and particularly but not exclusively relates to a coated element for an engine, e.g. a gas turbine engine.

Threaded fasteners have previously been coated in silver via electroplating since silver provides excellent anti-seize properties, including a low friction coefficient, low friction scatter, and high levels of reusability. For example, the silver may be applied to either, or both the internal and external threads of mechanical fasteners.

Alternatively, a number of dry film lubricants (DFLs) based on molybdenum disulphide, graphite, or lubricious oxides have been used. Like silver plating, DFLs can be applied to the internal and external threads of fasteners by means of dip, spray or brush coating with subsequent curing. These coatings also provide low friction surfaces.

Typically, the dimensions of the internal nut and external bolt threads are designed to accommodate coating thicknesses between 5 and 20 microns. Whilst this range is achievable in both the application of silver and DFLs, they may not be suited to smaller thicknesses.

Although silver provides excellent anti-seize properties, it is associated with significant corrosion problems, particularly when coating nickel or titanium alloys. For example, degradation of the coating in an engine environment can result in accelerated corrosion due to silver migration and/or the silver combining with sulphur and chlorine. Silver also has significant health concerns, both in terms of the plating process itself and as a contaminant within an engine.

The coating process for dry film lubricants on the other hand is subject to large variability and as such, these coatings do not provide the same level of performance or reusability as silver. Furthermore, DFLs also promote corrosion due to the elements or compounds used in the pigment or binder.

Seizure of threaded fasteners is commonly attributed to galling between the two substrates, and may be due to cold welding of the fastener constituents and/or due to chemical reactions taking place. Both silver and DFL coatings are used to provide a barrier to this, however their inherent properties result in deformation of the coating or chemical instability.

The present disclosure therefore seeks to address these issues.

According to a first aspect of the present invention there is provided a first fastener element adapted to selectively engage a second fastener element, wherein the first element comprises a coating and at least an engaging portion of the first element is coated in said coating, wherein the coating is formed by vapour deposition to provide a thermo-chemically stable layer to prevent seizure of the fasteners for temperatures up to 800°C.

The coating comprises one or more of chromium nitride, aluminium nitride, chromium oxide, aluminium oxide, titanium carbide, chromium carbide or aluminium carbide. The first element may be made from titanium.

The first and/or second elements may be elements for an engine, e.g. engine elements. For example, the first and second elements may be components of an engine, for example a gas turbine engine.

The coating may be suitable for use in high temperature environments, e.g. up to approximately 800°C. Accordingly, the first element, e.g. the coating, may be configured to operate in temperatures up to 800°C. The first element, e.g. the coating, may be configured to operate in temperatures greater than 50°C.

The first element may comprise a threaded portion adapted to engage a corresponding threaded portion of the second element. By way of example, the first element may comprise one of a nut or a bolt and the second element comprises the other of the nut or bolt.

The coating may be formed by Physical Vapour Deposition (PVD). Alternatively, the coating may be formed by Chemical Vapour Deposition (CVD).

The coating thickness may be between 0.5 and 50 microns. The first element may comprise one or more layers of coating.

An assembly may comprise the aforementioned first and second elements. The second element may comprise a coating. At least an engaging portion of the second element may be coated in said coating. The coating on the second element may be formed by vapour deposition, e.g. to provide a thermo-chemically stable layer for temperatures up to 800°C. The optional features described with respect to the first element may also apply to the second element. For example, the coating of the second element may comprise one or more of a nitride, oxide or carbide of titanium, chromium or aluminium and the second element may be made from titanium.

A turbomachine or gas turbine may comprise the aforementioned first element or the aforementioned assembly of first and second elements.

According to a second aspect of the present invention there is provided a method of manufacturing a first fastener element adapted to selectively engage a second fastener element, the method comprising: coating the first element by vapour deposition to provide a thermo-chemically stable layer to prevent seizure of the fasteners for temperatures up to 800°C. The method comprises coating the first element with one or more of chromium nitride, aluminium nitride, chromium oxide, aluminium oxide, titanium carbide, chromium carbide or aluminium carbide.

The method may comprise coating by Physical Vapour Deposition (PVD) or by Chemical Vapour Deposition (CVD).

For a better understanding of the present invention, and to show more clearly how it may be carried into effect, reference will now be made, by way of example, to the accompanying drawings, in which:-

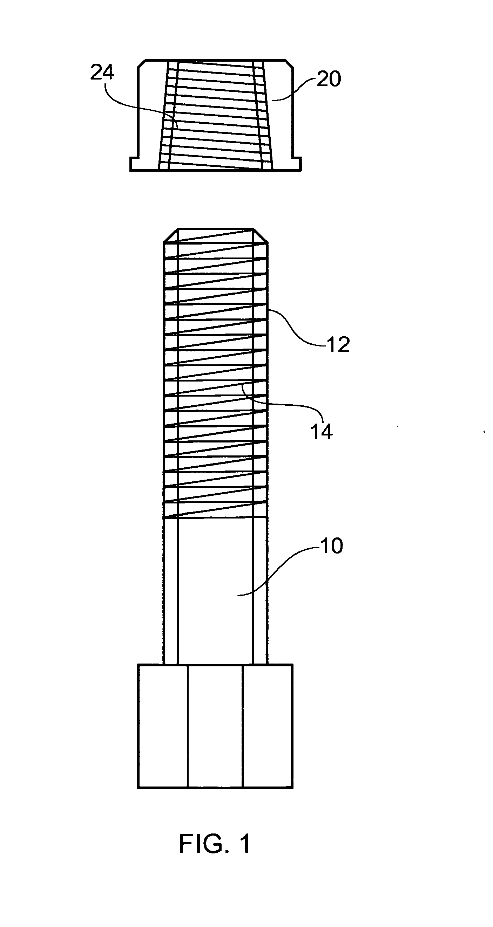

Figure 1 shows a nut and bolt assembly according to an example of the present disclosure.

With reference to Figure 1, a first element 10 according to an example of the present disclosure, may comprise a coating 12. The first element 10 may be adapted to selectively engage a second element 20. In the example shown, the first element 10 comprises a bolt and the second element 20 comprises a nut, although the first and second elements may comprise any fastener adapted for mutual engagement. The first and/or second elements may be made from titanium, nickel or any other alloy.

The first element 10 may comprise an engaging portion 14 which is adapted to engage a corresponding engaging portion 24 of the second element 20. In the example shown the engaging portions 14, 24 comprise corresponding threaded portions. For example, the engaging portion 14 may comprise a thread provided on an outer facing surface of the first element 10 and the engaging portion 24 may comprise a thread provided on an inner facing surface of the second element 20.

All or part of the engaging portion 14 of the first element 10 may be coated in said coating 12. Equally, the coated area may be concentrated on, but not restricted to the engaging portion 14 of the first element 10.

The engaging portion 24 of the second element 20 may alternatively or additionally to the first element be coated in the coating. All or part of the engaging portion 24 of the second element 20 may be coated in said coating. The coated area may be concentrated on, but not restricted to the engaging portion 24 of the second element 20.

The present invention involves the application of one or more coatings via a vapour deposition process, namely but not restricted to physical vapour deposition (PVD), or chemical vapour deposition (CVD). Coatings may be deposited onto the threaded components of nuts and bolts. This incorporates the coating of the entire nut/bolt, or the individual threaded sections of the nut/bolt, or combinations thereof.

Vapour deposition processes may be used for the deposition of high purity, thin film materials. The respective coating is grown on the substrate surface through the condensation of species from a vapour form. The method of vapour generation and mass transport differ between processes. As an example, physical vapour deposition can employ electron beam, sputtering, or cathodic arc means to evaporate the target material, which is subsequently transported in a vacuum to the substrate by an applied bias. Furthermore, ion doping may be used during the vapour deposition, e.g. to improve lubrication of the coating.

The coating 12 comprises one or more of chromium nitride, aluminium nitride, chromium oxide, aluminium oxide, titanium carbide, chromium carbide or aluminium carbide.

Coating thicknesses may range between 0.5 and 50 microns. The coating may comprise a single layer or a plurality of layers. Each layer may comprise the same composition or the layers may have different compositions. Furthermore, each layer may be in a single phase or the layers may be in different phases such that they define multiphase morphologies.

In summary, the present disclosure relates to the application of hard and/or wear resistant coatings based on nitrides, oxides or carbides by vapour deposition techniques to either or both the internal and external threads of mechanical fasteners. The coatings may prevent seizure and provide significant reusability of mechanical fasteners operating in aggressive conditions, e.g. up to temperatures of around 800°C.

The above-described coating process specifically allows for the deposition of material types mentioned above which are capable of being temperature stable, corrosion resistant and adherent whilst not causing deformation of the substrate or interfering with the engineering tolerance of the part. This is presently not achievable through alternative coating application methods.

The use of coatings with higher thermal and chemical stability may provide a barrier to metal-metal contact, which may otherwise result in pressure welding or galling in engine conditions. The coating of the present invention may improve the hardness and wear resistance to prevent galling and fretting of the threads, which may ultimately result in seizure of the fastener. The deposition processes employed allow greater degree of control over prior processes to improve uniformity of coating thickness along threads on mechanical fasteners of varying sizes and also enhancing product repeatability.

Advantages of the coating of the present invention include: high temperature stability; chemical stability (and therefore better resistance to corrosion and galling); a known and repeatable coefficient of friction (and therefore a more reliably known stress required to tighten the bolts and more predictable overall clamping loads); elimination of the corrosion issues associated with silver on surrounding parts in the engine; and a significant reduction in coating thickness and quality variability.

The coatings of the present disclosure are further advantageous because they are uniform and adherent. Furthermore, the vapour deposition process used to apply the coating is repeatable and eliminates the health and safety issues associated with silver plating.

Coatings of the present disclosure may be used on a multitude of base alloys, which may be capable of being reused without the negative aspects associated with DFL's and silver.

The present disclosure is not restricted to components for engines, e.g. gas turbine engines or jet engines. The coatings disclosed herein may be applied in industrial applications, for example where anti seizure properties are required on fasteners, e.g. threaded fasteners. For example, the present disclosure may be applied to any application where the release of parts is required such as high temperature moulds or release agents.

## Claims

1. A first fastener element (10) adapted to selectively engage a second fastener element (20), wherein the first element comprises a coating (12) and at least an engaging portion of the first element is coated in said coating, **characterised in that** the coating is formed by vapour deposition to provide a thermo-chemically stable layer to prevent seizure of the fasteners for temperatures up to 800°C, wherein:
the coating comprises one or more of chromium nitride, aluminium nitride, chromium oxide, aluminium oxide, titanium carbide, chromium carbide or aluminium carbide.

2. The first element of claim 1, wherein the first element is made from titanium.

3. The first element of claim 1 or claim 2, wherein the first element comprises a threaded portion (14) adapted to engage a corresponding threaded portion (24) of the second element.

4. The first element of any preceding claim, wherein the coating thickness is between 0.5 and 50 microns.

5. The first element of any preceding claim, wherein the first element is configured to operate in temperatures greater than 50°C.

6. The first element of any preceding claim, wherein the coating is formed by Physical Vapour Deposition (PVD).

7. The first element of any of claims 1 to 5, wherein the coating is formed by Chemical Vapour Deposition (CVD).

8. The first element of any preceding claim, wherein the first element comprises one or more layers of coating.

9. An assembly comprising the first fastener element of claim 1 and a second fastener element selectively engaged by the first fastener element,
wherein the second fastener element comprises a further coating and at least an engaging portion of the second fastener element is coated in said further coating, wherein the further coating is formed by vapour deposition to provide a thermo-chemically stable layer for temperatures up to 800°C.

10. A turbomachine or gas turbine comprising the first fastener element of any of claims 1 to 8 or the assembly of claim 9.

11. A method of manufacturing a first fastener element (10) adapted to selectively engage a second fastener element (20), the method comprising:
coating (12) at least an engaging portion (14) of the first fastener element by vapour deposition to provide a thermo-chemically stable layer to prevent seizure of the fasteners for temperatures up to 800°C, wherein:
the method comprises coating the first element with one or more of chromium nitride, aluminium nitride, chromium oxide, aluminium oxide, titanium carbide, chromium carbide or aluminium carbide.

12. The method of claim 11, wherein the method comprises coating by Physical Vapour Deposition (PVD).

13. The method of claim 11 or 12, wherein the method comprises coating by Chemical Vapour Deposition (CVD).

## Patentansprüche

1. Erstes Befestigungselement (10), das so angepasst ist, dass es ein zweites Befestigungselement (20) selektiv in Eingriff nimmt, wobei das erste Element eine Beschichtung (12) umfasst und zumindest ein eingreifender Teil des ersten Elements mit der Beschichtung beschichtet ist, **dadurch gekennzeichnet, dass** die Beschichtung durch Gasphasenabscheidung gebildet wird, um eine thermochemisch stabile Schicht zu bieten, um ein Festfressen der Befestigungen für Temperaturen bis zu 800° C zu verhindern, wobei:
die Beschichtung eines oder mehrere von Chromnitrid, Aluminiumnitrid, Chromoxid, Aluminiumoxid, Titancarbid, Chromcarbid oder Aluminiumcarbid umfasst.

2. Erstes Element nach Anspruch 1, wobei das erste Element aus Titan gefertigt ist.

3. Erstes Element nach Anspruch 1 oder Anspruch 2, wobei das erste Element ein Gewindeteil (14) umfasst, das so angepasst ist, dass es ein entsprechendes Gewindeteil (24) des zweiten Elements in Eingriff nimmt.

4. Erstes Element nach einem vorhergehenden Anspruch, wobei die Dicke der Beschichtung zwischen 0,5 und 50 Mikrometern liegt.

5. Erstes Element nach einem vorhergehenden Anspruch, wobei das erste Element so konfiguriert ist, dass es in Temperaturen von mehr als 50° C arbeitet.

6. Erstes Element nach einem vorhergehenden Anspruch, wobei die Beschichtung durch physikalische Gasphasenabscheidung (PVD) gebildet wird.

7. Erstes Element nach einem der Ansprüche 1 bis 5, wobei die Beschichtung durch chemische Gasphasenabscheidung (CVD) gebildet wird.

8. Erstes Element nach einem vorhergehenden Anspruch, wobei das erste Element eine oder mehrere Schichten der Beschichtung umfasst.

9. Anordnung, umfassend das erste Befestigungselement nach Anspruch 1 und ein zweites Befestigungselement, das vom ersten Befestigungselement selektiv in Eingriff genommen wird, wobei das zweite Befestigungselement eine weitere Beschichtung umfasst und zumindest ein eingreifender Teil des zweiten Befestigungselements mit der weiteren Beschichtung beschichtet ist, wobei die weitere Beschichtung durch Gasphasenabscheidung gebildet wird, um eine thermochemisch stabile Schicht für Temperaturen bis zu 800° C zu bieten.

10. Turbomaschine oder Gasturbine, umfassend das erste Befestigungselement nach einem der Ansprüche 1 bis 8 oder die Anordnung nach Anspruch 9.

11. Verfahren zur Herstellung eines ersten Befestigungselements (10), das so angepasst ist, dass es ein zweites Befestigungselement (20) selektiv in Eingriff nimmt, wobei das Verfahren Folgendes umfasst:
Beschichten (12) zumindest eines eingreifenden Teils (14) des ersten Befestigungselements durch Gasphasenabscheidung, um eine thermochemisch stabile Schicht zu bieten, um ein Festfressen der Befestigungen für Temperaturen bis zu 800° C zu verhindern, wobei:
das Verfahren das Beschichten des ersten Elements mit einem oder mehreren von Chromnitrid, Aluminiumnitrid, Chromoxid, Aluminiumoxid, Titancarbid, Chromcarbid oder Aluminiumcarbid umfasst.

12. Verfahren nach Anspruch 11, wobei das Verfahren das Beschichten durch physikalische Gasphasenabscheidung (PVD) umfasst.

13. Verfahren nach Anspruch 11 oder 12, wobei das Verfahren das Beschichten durch chemische Gasphasenabscheidung (CVD) umfasst.

## Revendications

1. Un premier élément de fixation (10) adapté pour engrener de façon sélective un deuxième élément de fixation (20), le premier élément comprenant un revêtement (12) et au moins une partie d'engrènement du premier élément étant recouverte dudit revêtement, **caractérisé en ce que** le revêtement est formé par déposition de vapeur de façon à produire une couche thermochimiquement stable afin d'empêcher le grippage des éléments de fixation avec des températures pouvant atteindre 800°C, dans lequel :
le revêtement comprenant un ou plusieurs des suivants : nitrure de chrome, nitrure d'aluminium, oxyde de chrome, oxyde d'aluminium, carbure de titane, carbure de chrome ou carbure d'aluminium.

2. Le premier élément selon la revendication 1, le premier élément étant fabriqué en titane.

3. Le premier élément selon la revendication 1 ou la revendication 2, le premier élément comprenant une partie filetée (14) adaptée pour s'engager avec une partie filetée correspondante (24) du deuxième élément.

4. Le premier élément selon une quelconque des revendications précédentes, l'épaisseur du revêtement étant comprise entre 0,5 et 50 microns.

5. Le premier élément selon une quelconque des revendications précédentes, le premier élément étant configuré pour fonctionner en présence de températures supérieures à 50°C.

6. Le premier élément selon une quelconque des revendications précédentes, le revêtement étant formé par déposition en phase gazeuse par procédé physique (PVD).

7. Le premier élément selon une quelconque des revendications 1 à 5, le revêtement étant formé par déposition en phase gazeuse par procédé chimique (CVD).

8. Le premier élément selon une quelconque des revendications précédentes, le premier élément comprenant une ou plusieurs couches de revêtement.

9. Un ensemble comprenant le premier élément de fixation selon la revendication 1 et un deuxième élément de fixation engrené de façon sélective par le premier élément de fixation, le deuxième élément de fixation comprenant un revêtement supplémentaire, et au moins une partie d'engrènement du deuxième élément de fixation étant recouverte dudit revêtement, le revêtement supplémentaire étant formé par déposition de vapeur de façon à produire une couche thermochimiquement stable pour des températures pouvant atteindre 800°C.

10. Une turbomachine ou une turbine à gaz comprenant le premier élément de fixation selon une quelconque des revendications 1 à 8, ou l'ensemble selon la revendication 9.

11. Une méthode de fabrication d'un premier élément de fixation (10) adaptée pour engrener de façon sélective un deuxième élément de fixation (20), la méthode comprenant :
le revêtement (12) d'au moins une partie d'engrènement (14) du premier élément de fixation par revêtement sur base d'évaporation, afin de former une couche thermo-chimiquement stable permettant d'empêcher le grippage des éléments de fixation en présence de températures pouvant atteindre 800°C, où
la méthode comprenant le revêtement du premier élément avec un ou plusieurs des suivants : nitrure de chrome, nitrure d'aluminium, oxyde de chrome, oxyde d'aluminium, carbure de titane, carbure de chrome ou carbure d'aluminium.

12. La méthode selon la revendication 11, cette méthode comprenant le revêtement par déposition en phase gazeuse par procédé physique (PVD).

13. La méthode selon la revendication 11 ou 12, cette méthode comprenant le revêtement par déposition en phase gazeuse par procédé chimique (CVD).
